(19) **Europäisches Patentamt**
**European Patent Office**
**Office européen des brevets**

(11) **EP 1 824 780 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(21) Anmeldenummer: **05739531.1**

(22) Anmeldetag: **30.03.2005**

(51) Int Cl.:
***C01B 3/00*** *(2006.01)*

(86) Internationale Anmeldenummer:
**PCT/EP2005/003494**

(87) Internationale Veröffentlichungsnummer:
**WO 2006/063627 (22.06.2006 Gazette 2006/25)**

(54) **WASSERSTOFF SPEICHERNDES KOMPOSITMATERIAL SOWIE SEINE VERWENDUNG IN EINER VORRICHTUNG ZUR REVERSIBLEN SPEICHERUNG VON WASSERSTOFF**

COMPOSITE MATERIAL STORING HYDROGEN, AND ITS USE IN A DEVICE FOR THE REVERSIBLE STORAGE OF HYDROGEN

MATERIAU COMPOSITE STOCKANT DE L'HYDROGENE ET SON UTILISATION DANS UN DISPOSITIF PERMETTANT LE STOCKAGE REVERSIBLE D'HYDROGENE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **14.12.2004 DE 102004061286**

(43) Veröffentlichungstag der Anmeldung:
**29.08.2007 Patentblatt 2007/35**

(73) Patentinhaber: **GKSS-Forschungszentrum Geesthacht GmbH**
**21502 Geesthacht (DE)**

(72) Erfinder:
• **BARKHORDARIAN, Gagik**
**21502 Geesthacht (DE)**
• **KLASSEN, Thomas, Dr.**
**21465 Wentorf (DE)**
• **BORMANN, Rüdiger**
**22301 Rosengarten (DE)**

(74) Vertreter: **Reinstädler, Diane et al**
**Anwaltskanzlei**
**Gulde Hengelhaupt Ziebig & Schneider**
**Wallstrasse 58/59**
**10179 Berlin (DE)**

(56) Entgegenhaltungen:
**US-A1- 2001 014 309**

• **HUOT J ET AL: "Magnesium-based nanocomposites chemical hydrides" JOURNAL OF ALLOYS AND COMPOUNDS, ELSEVIER SEQUOIA, LAUSANNE, CH, Bd. 353, Nr. 1-2, 7. April 2003 (2003-04-07), Seiten L12-L15, XP004416859 ISSN: 0925-8388**
• **LIANG G ET AL: "Hydrogen storage in mechanically milled Mg-LaNi5 and MgH2-LaNi5 composites" JOURNAL OF ALLOYS AND COMPOUNDS, ELSEVIER SEQUOIA, LAUSANNE, CH, Bd. 297, Nr. 1-2, 2. Februar 2000 (2000-02-02), Seiten 261-265, XP004253875 ISSN: 0925-8388**
• **TESSIER J-P ET AL: "Hydrogen production and crystal structure of ball-milled MgH2-Ca and MgH2-CaH2 mixtures" JOURNAL OF ALLOYS AND COMPOUNDS, ELSEVIER SEQUOIA, LAUSANNE, CH, Bd. 376, Nr. 1-2, 11. August 2004 (2004-08-11), Seiten 180-185, XP004522042 ISSN: 0925-8388**
• **LIANG G ET AL: "Hydrogen storage properties of the mechanically milled MgH2-V nanocomposite" JOURNAL OF ALLOYS AND COMPOUNDS, ELSEVIER SEQUOIA, LAUSANNE, CH, Bd. 291, Nr. 1-2, 27. September 1999 (1999-09-27), Seiten 295-299, XP004364522 ISSN: 0925-8388**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Wasserstoff speicherndes Kompositmaterial sowie seine Verwendung in einer Vorrichtung zur reversiblen Speicherung von Wasserstoff, insbesondere für die Versorgung von Brennstoffzellen.

Zunehmende Umweltverschmutzung und sinkende Vorräte an fossilen Brennstoffen erfordern neue Energiekonzepte. Insbesondere sind erneuerbare Energiequellen wünschenswert, welche die fossilen Kraftstoffe ersetzen sollen, die aufgrund ihrer $CO_2$-Emissionen für den Treibhauseffekt und die globale Erwärmung verantwortlich gemacht werden. In diesem Zusammenhang weist Wasserstoff ideale Eigenschaften auf. Wasserstoff kann aus Wasser durch Elektrolyse erzeugt werden, wobei die elektrische Energie idealerweise aus regenerierbaren Energiequellen, wie Wind-, Solar- oder Wasserenergie gewonnen wird. Zudem wird bei der Verbrennung von Wasserstoff, beispielsweise in Verbrennungsmotoren oder Brennstoffzellen lediglich Wasserdampf erzeugt, wodurch ein geschlossener Energiekreis ohne umweltschädliche Emissionen entsteht. Neben stationären Anwendungen eignet sich die Wasserstoff-basierte Energie auch für mobile Anwendungen in so genannten Null-Emissionskraftfahrzeugen. Als problematisch gestaltet sich jedoch sowohl für stationäre als auch mobile Anwendungen die Speicherung von Wasserstoff ($H_2$) wegen seines niedrigen Siedepunktes (ca. 20 K oder -253°C bei 1 bar) und seiner geringen Dichte im gasförmigen Zustand bei Normaldruck (90 g/m$^3$). Zudem führt die Speicherung von flüssigem oder gasförmigen $H_2$ zu Sicherheitsproblemen. Vorteilhaft sind daher Wasserstoffspeichersysteme, in denen $H_2$ chemisch gespeichert vorliegt und die eine gute Langzeitstabilität und niedrige $H_2$-Drücke aufweisen und deren volumenbezogene Energiedichte sogar um etwa 60 % höher als die von flüssigem Wasserstoff ist. Chemische Wasserstoffspeicher weisen einen Speicherzustand und einen Nichtspeicherzustand (und gegebenenfalls einen oder mehrere Zwischenzustände) auf, zwischen denen sie idealerweise reversibel überführbar sind.

Eine bekannte Gruppe chemischer Wasserstoffspeicher mit hoher spezifischer Wasserstoffspeicherkapazität sind Leichtmetallhydride, etwa von Mg, B oder Al. Beispielsweise kann $MgH_2$ theoretisch bis zu 7,6 Gew.-% $H_2$ speichern. Nachteilig an diesen Verbindungen sind ihre langsamen Speicherkinetiken bei Raumtemperatur, die für eine "Tankfüllung" mehrere Stunden erfordern. Erst bei Temperaturen oberhalb von 300°C im Falle von $MgH_2$ liegen ausreichende Speichergeschwindigkeiten vor, weswegen die Leichtmetallhydride auch als Hochtemperaturhydride bezeichnet werden.

Es sind ferner komplexe Hydride der Formel $M_xA_yH_z$ bekannt, worin M ein Alkali- oder Erdalkalimetall und A meist Aluminium Al oder Bor B ist. Sie können bis zu ca. 5 Gew.-% $H_2$ speichern und sind salzartig aus dem kationischen Alkali- oder Erdalkalimetall (z. B. $Na^+$ oder $Mg^{2+}$) und anionischen Hydridgruppen (z. B. $AlH_4^-$ oder $BH_4^-$) aufgebaut. Die Alkalialanate $LiAlH_4$ und $NaAlH_4$ sind aufgrund ihrer relativ hohen massenbezogenen $H_2$-Speicherkapazitäten besonders interessant. Alanate zerfallen in zwei Schritten (z. B. $3\,NaAlH_4 \rightarrow Na_3AlH_6 + 2\,Al + 3\,H_2 \rightarrow 3\,NaH + 3\,Al + 9/2\,H_2$). Die Rehydrierung erfordert aber die Diffusion und Rekombination von Metallatomen, was noch immer zu relativ langsamen Kinetiken führt. Nahezu vollständige Reversibilität konnte unter Verwendung von nanokristallinen Alanaten mit Zusätzen von $TiCl_3$ als Promotor gezeigt werden. So redydrieren Natriumalanate bei Temperaturen von 100 bis 150°C innerhalb von 10 min, wozu jedoch Drücke von mindestens 80 bar erforderlich sind.

Auf der anderen Seite sind so genannte Raumtemperaturhydride von Übergangmetallen bekannt (z. B. $FeTiH_z$ oder $LaNi_5H_z$), die zwar bei Raumtemperatur einsetzbar sind, jedoch nur höchstens 3 Gew.-% Wasserstoff speichern können.

Neueste Ansätze untersuchen die Einsetzbarkeit von stickstoffhaltigen Gruppen, etwa die Konversion von Lithiumamid zu Lithiumimid, wobei theoretisch bis zu 9,1 Gew.-% Wasserstoff gespeichert werden können. Da hierbei jedoch Stickstoff in Form von $NH_3$ entweichen kann, weist das System nur eine begrenzte Reversibilität auf. Wesentliche Verbesserungen wurden durch die Zugabe von Mg und die Bildung von Magnesiumnitrid $Mg_3N_3$ erreicht, wobei Reversibilität bei 200°C und 50 bar beobachtet wurde.

Aus US 2001/0018939 A ist eine Zusammensetzung bekannt, die aus einer homogenen Legierung aus einem $AlH_3$-basierten komplexen Hydrid $M_x(AlH_3)H_z$ (mit M= Li, Na, Be, Mg, Ca) und einer zweiten Komponente besteht. Letztere kann ein nicht hydridbildendes Metall oder Halbmetall sein oder ein hydridbildendes Erdalkali- oder Übergangsmetall beziehungsweise ein binäres Metallhydrid von diesen oder ein weiteres $AlH_3$-basiertes komplexes Hydrid. Das laut Röntgenstrukturanalyse einphasig vorliegende Material weist eine massenbezogene $H_2$-Speicherkapazität von maximal 3 % auf und eine Absorptionsdauer bei etwa 130°C und 80 bar von mehreren Stunden.

US 6,514,478 B beschreibt ein System, das im hydrogenierten Zustand LiH oder ein Lithium-basiertes komplexes Hydrid $Li_xM_yH_z$ mit M= Be, Mg, Ti, V, Zr und einen Zusatz eines Metalls oder Halbmetalls enthält. Das System liegt im hydrogenierten Zustand (Speicherzustand) einphasig vor, beispielsweise als Li-C-H, wobei im dehydrogenierten Zustand der elementare Zusatz eine Verbindung oder Lösung mit Li unter Bildung einer Phase (z. B. Li-C) eingeht. Das System Li-C-H etwa weist eine Dehydrierungstemperatur von 150 bis 230°C und eine Hydrierungstemperatur von 200°C sowie eine Speicherkapazität von etwa 0,5 Gew.-% auf.

J. Huot et al. (Journal of Alloys and Compounds 353 (2003) L12-L15) beschreiben ein Wasserstoff speicherndes Material, das $MgH_2$ und Ca, Li oder $LiAlH_4$ umfasst. Die $H_2$-Freisetzung erfolgt irreversibel im Wege der Hydrolyse durch Zugabe von Wasser. Auf die gleiche Weise funktionieren die in J.-P. Tessier et al. (Journal of Alloys and Compounds 376 (2004) 180-185) beschriebenen Systeme MgH$_2$/Ca und MgH$_2$/CaH$_2$.

Aus G. Liang et al. (Journal of Alloys and Compounds 297 (2000) 261-264 ist ein Wasserstoff speicherndes Kompositmaterial bekannt, das durch Kugelmahlen aus LaNi$_5$ und Mg oder MgH$_2$ hergestellt wird und in seinem Speicherzustand MgH$_2$, LaH$_3$ und Mg$_2$NiH$_4$ umfasst und in seinem Nichtspeicherzustand Mg$_2$Ni, LaH$_3$ und Mg.

Ein Wasserstoff speicherndes Material lässt sich auch durch Kugelmahlen von MgH$_2$ und Vanadium herstellen, wobei eine teilweise Hydrierung von Vanadium zu VH$_{0,81}$ beobachtet wird (Journal of Alloys and Compounds 291 (1999) 295-299).

Zusammenfassend lässt sich feststellen, dass derzeit kein System existiert, das Wasserstoff bei mittleren bis niedrigen Temperaturen mit einer ausreichenden Geschwindigkeit hoch reversibel und in größeren Mengen speichert. Ein solches Material bereitzustellen, insbesondere ein Material mit hoher spezifischer Speicherkapazität und Reversibilität bei niedrigen Hydrierungs- und Dehydrierungstemperaturen, ist Aufgabe der vorliegenden Erfindung.

Diese Aufgabe wird erfindungsgemäß durch ein Kompositmaterial mit den im Anspruch 1 genannten Merkmalen gelöst. Das erfindungsgemäße Kompositmaterial ist im Wesentlichen reversibel zwischen einem Speicherzustand und einem Nichtspeicherzustand (und optional einem oder mehreren Zwischenzuständen) überführbar, wobei das System in seinem Speicherzustand die Komponenten umfasst:

(a) zumindest eine erste Hydridkomponente, die zumindest ein komplexes Hydrid M$_x$A$_y$H$_z$ umfasst, worin M ein Metall der Ordnungszahl > 3, ausgewählt aus den Gruppen des Periodensystems IA, IIA, IIIB, IVB, VB und den Lanthaniden ist und A ausgewählt ist aus der Gruppe B, Si, C, Ga, Ge, Zn, Sn, S und N, und

(b) zumindest eine zweite Komponente, die mindestens eine Komponente umfasst aus:

(i) einem Element C in der Oxidationsstufe 0,
(ii) einer wasserstofffreien, binären oder höheren Verbindung oder Legierung des Elements C mit mindestens einem weiteren Element D,
(iii) einem binären Hydrid E$_x$H$_z$, wobei E ausgewählt ist aus den Gruppen IA, IIA, IIIB, IVB, VB, XB und XIIB und den Lanthaniden, und
(iv) einem Legierungshydrid F$_x$G$_y$H$_z$ mindestens zweier Metalle F und G,

wobei die zumindest eine erste Hydridkomponente (a) und die zumindest eine zweite Komponente (b) in einem ersten festen Mehrphasensystem vorliegen und wobei bei der Überführung in den Nichtspeicherzustand des Systems die zumindest eine erste Hydridkomponente (a) mit der zumindest einen zweiten Komponente (b) derart im Wege einer Redoxreaktion unter Bildung von H$_2$ reagiert, dass im Nichtspeicherzustand mindestens eine weitere wasserstofffreie Verbindung und/oder Legierung gebildet wird und ein weiteres festes Mehrphasensystem entsteht.

Erfindungsgemäß liegt demnach sowohl der (hydrierte) Speicher- als auch der (dehydrierte) Nichtspeicherzustand des Kompositmaterials in jeweils mindestens zwei festen Phasen vor, wobei das Material eine amorphe und/oder kristalline, vorzugsweise nanokristalline, Mikrostruktur aufweisen kann oder Mischungen von diesen. Dabei wird im Rahmen der vorliegenden Erfindung unter einer "Phase" eine definierte (Kristall)struktur (im Gegensatz zu einem Aggregatzustand) verstanden, das heißt in einem festen "Mehrphasensystem" gemäß der Erfindung liegen zwei oder mehr, durch Röntgenstrukturanalyse unterscheidbare Strukturen vor, die jeweils kristallin oder amorph sein können. Weiterhin soll im Folgenden unter einer "wasserstofffreien" Komponente, Verbindung oder Legierung eine Phase verstanden werden, die nicht als Hydrid vorliegt. Dies schließt jedoch nicht aus, dass die "wasserstofffreie" Phase geringe Mengen Wasserstoff in gelöster Form, insbesondere in der Nähe von Gitterdefekten enthält. Ferner versteht sich der Begriff "Nichtspeicherzustand" als ein Zustand, der gegenüber dem "Speicherzustand" wasserstoffverarmt ist, aber nicht zwangsläufig vollständig wasserstofffrei sein muss.

Mit anderen Worten existieren in beiden Zuständen immer zumindest zwei Phasen, die auf die Einzelkomponenten rückführbar sind. Bei der bevorzugten im Wesentlichen nanokristallinen Mikrostruktur des Systems bedeutet dies die Existenz von Nanokristallen der ersten Hydridkomponente (a) und Nanokristallen der zweiten Komponente (b) nebeneinander. Es wurde nämlich gefunden, dass das erfindungsgemäße System einerseits den Vorteil einer erleichterten (Re)Hydrierung (Wasserstoffabsorption) und damit verbesserten Reversibilität gegenüber Einphasensystemen aufweist und andererseits eine niedrigere Dehydrierungstemperatur. Obwohl beispielsweise in einem System gemäß Stand der Technik {z. B. LiBH$_4$ → LiH + B + 3/2 H$_2$} die treibende thermodynamische Kraft der Hydrierungsreaktion höher ist als in einem erfindungsgemäßen Mehrphasensystem {z. B. 2 LiBH$_4$ + MgH$_2$ ↔ 2 LiH + MgB$_2$ + 4 H$_2$}, zeigen Messungen eine leichte Hydrierbarkeit und damit gute Reversibilität nur für das erfindungsgemäße System. Dies ist vermutlich auf einen kinetischen Effekt, insbesondere auf die hohe Diffusionsneigung des elementaren Bors zurückzuführen, wodurch es zu einer makroskopischen Entmischung der Komponenten kommen kann, welche die Reaktion von B mit LiH unter Bildung von LiBH$_4$ im bekannten System erschwert. Dagegen scheint die örtliche Positionierung von MgB$_2$ in der Mischung und die elektronische Situation von Bor in MgB$_2$ im erfindungsgemäßen System die Hydrierungsreaktion zu fördern.

Ein weiterer Vorteil besteht in der weniger stark negativen Reaktionsenthalpie, das heißt der höheren treibenden thermodynamischen Kraft bei der Dehydrierungsreaktion bei einer gegebenen Temperatur, die durch die günstigere elektronische Situation der im Nichtspeicherzustand gebildeten wasserstofffreien (binären oder höheren) Verbindung (z. B. $MgB_2$ gegenüber B im oben genannten Beispiel) verursacht wird. Es ist besonders bevorzugt vorgesehen, die Komponenten sowohl des Nichtspeicher- als auch des Speicherzustandes und/oder die Mikrostruktur des Materials so zu wählen, dass die Reaktionsenthalpie der Redoxgesamtreaktion des Systems zwischen seinem Speicher- und seinem Nichtspeicherzustand pro Mol Wasserstoff $H_2$ im Bereich von -10 bis -65 kJ/mol, insbesondere -15 bis -40 kJ/mol liegt. Auf diese Weise können Dehydrierungstemperaturen (Desorptionstemperaturen) im Bereich von typischerweise 20 bis 180°C eingestellt werden. Diese Temperaturen lassen sich durch Zusetzung eines oder mehrerer geeigneter Katalysatoren noch herabsetzen.

Insgesamt scheint die Hydrierungsreaktion des erfindungsgemäßen Materials aufgrund kinetischer Effekte und die Dehydrierungsreaktion aufgrund thermodynamischer Effekte gegenüber bekannten Einphasensystemen verbessert zu sein, so dass sich das Material einerseits durch eine hohe Reversibilität und andererseits durch eine niedrige Desorptionstemperatur auszeichnet.

Das erfindungsgemäße Material kann zwischen seinem Speicherzustand und seinem Nichtspeicherzustand (und seinen optionalen Zwischenzuständen) durch Variation des Drucks und/oder der Temperatur überführt werden.

Das Material kann in einfacher Weise aus den Komponenten des Speicherzustandes dargestellt werden und vor seiner Nutzung einem oder mehreren Dehydrierungs- und Hydrierungszyklen unterworfen werden. Alternativ können auch die Komponenten des Nichtspeicherzustandes miteinander verarbeitet und nachfolgend hydriert werden. Auch Mischformen, bei denen die Komponenten teils des hydrogenierten und teils des dehydrogenierten Zustandes oder von Zwischenzuständen oder von Vorläuferstrukturen eingesetzt werden, sind denkbar. Beispielsweise kann ein elementares Metall E zur Herstellung eingesetzt werden, das nach Hydrierung das binäre Hydrid $E_xH_z$ bildet.

Gemäß einer vorteilhaften Ausgestaltung der Erfindung weist die zumindest eine erste Hydridkomponente des Kompositmaterials im Speicherzustand zusätzlich zu dem

(i) mindestens einen komplexen Hydrid $M_xA_yH_z$
(ii) mindestens ein zweites binäres Hydrid $B_xH_z$ auf, worin B ausgewählt ist aus den Gruppen IA, IIA, IIIB, IVB, VB, XB und XIIB und den Lanthaniden.

In dem vorgenannten System liegen erfindungsgemäß die Elemente C, D, E, F und/oder G der Komponente (b) im Nichtspeicherzustand in mindestens einer wasserstofffreien Verbindung und/oder Legierung mit mindestens einem der Elemente A, B und/oder M der Komponente (a) vor.

Die Erfindung ist hierbei nicht auf einen engen Kreis geeigneter Komponenten beschränkt. Vielmehr kommt eine große Bandbreite von komplexen oder binären Hydriden, Elementen und wasserstofffreien Verbindungen und Legierungen in Frage, so lange die Komponenten in der geforderten Weise miteinander reagieren und die Gesamtreaktion zwischen Speicher- und Nichtspeicherzustand eine geeignete Reaktionsenthalpie aufweist.

Die Elemente C und D können - im oben definierten Rahmen - aus der Gruppe der Metalle, Nicht-, Halb- und Übergangsmetalle und den Lanthaniden ausgewählt sein. Insbesondere kommen in Frage Sb, Bi, Ge, Sn, Pb, Ga, In, Tl, Se, S, Te, Br, I, Sc, Y, La, Ti, Zr, Hf, V, Nb, Ta, Mo, W, Re, Ru, Os, Co, Ag, Li, Rb, Cs, Be, Mg, Sr, Ba und die Lanthanide Ce, Pr, Nd, Pm, Sm, Eu, Gd, Tb, Dy, Ho, Er, Tm, Yb und Lu.

Die Elemente B und E der binären Hydride sind insbesondere aus der Gruppe Li, Na, K, Rb, Cs, Be, Mg, Ca, Sr, Sc, Y, La, Ti, Zr, Hf, V, Nb, Ta, Zn, Pd, Pr, Nd, Pm, Sm, Eu, Gd, Tb, Dy, Ho, Er, Tm, Yb und Lu gewählt.

Die Erfindung betrifft speziell Lithium- und Aluminium-freie Hydride, wobei das komplexe Hydrid $M_xA_yH_z$ mit sämtlichen zuvor genannten Komponenten (b) kombiniert werden kann. Das komplexe Hydrid kann insbesondere ein Borhydrat sein, z. B. $NaBH_4$, $Ca(BH_4)_2$, $Mg(BH_4)_2$, $La(BH_9)_3$ oder $Y(BH_4)_3$.

Bevorzugte Beispiele für Kompositmaterialien gemäß der Erfindung werden nachfolgend genannt. Für einige Beispiele sind zudem die Reaktionsenthalpie $\Delta H$ und die Reaktionsentropie $\Delta S$ und gemäß der Gleichung für die freie Reaktionsenthalpie $\Delta G$ (298 K) $\Delta G = \Delta H - T\Delta S$ bei 25 °C zusammen mit der Gleichgewichtstemperatur $T_{eq}$ angegeben, bei der das Hydrid mit 1 bar Wasserstoffgas im Gleichgewicht steht, das heißt $\Delta G°$ gleich 0 ist. Bei einer Temperatur oberhalb von $T_{eq}$ (bzw. bei geringerem Druck) überwiegt der Entropieanteil und das Hydrid zerfällt; bei einer Temperatur unterhalb von $T_{eq}$ (bzw. bei höherem Druck) überwiegt die chemische Enthalpie und das Hydrid wird gebildet. Die angegebenen Werte für $\Delta H$ und $\Delta S$ beziehen sich auf die jeweilige Reaktionsgleichung wie dargestellt.

$$2NaBH_4 + Mg \leftrightarrow MgB_2 + 2NaH + 3H_2$$

$$\Delta G = 103.000 \text{ J/mol} - (T \times 231 \text{ J/(mol} \cdot \text{K))}$$
$$\Rightarrow T_{eq.} = 172°C, \Delta H_{H2} = 34,3 \text{ kJ/mol}$$

$$3NaBH_4 + As \leftrightarrow Na_3As + 3B + 6H_2$$

$$\Delta G = 365.000 \text{ J/mol} - (T \times 590 \text{ J/(mol} \cdot \text{K))}$$
$$\Rightarrow T_{eq.} = 345°C ; \Delta H_{H2} = 60,8 \text{ kJ/mol}$$

$$3NaBH_4 + ALSb \leftrightarrow Na_3Sb + ALB_2 + B + 6H_2$$

$$\Delta G = 277.000 \text{ J/mol} - (T \times 658 \text{ J/(mol} \cdot \text{K))}$$
$$\Rightarrow T_{eq.} = 150°C ; \Delta H_{H2} = 46,2 \text{ kJ/mol}$$

$$NaBH_4 + Se \leftrightarrow Na_2Se + 2B + 4H_2$$

$$2NaBH_4 + MgH_2 \leftrightarrow MgB_2 + 2NaH + 4H_2$$

$$Ca(BH_4)_2 + Mg \leftrightarrow MgB_2 + CaH_2 + 3H_2$$

$$La(BH_4)_3 + 1,5MgH_2 \leftrightarrow 1,5MgB_2 + LaH_3 + 6H_2$$

$$Mg(BH_4)_2 + MgH_2 \leftrightarrow MgB_2 + MgH_2 + 4H_2$$

$$Y(BH_4)_3 + 1,5MgH_2 \leftrightarrow 1,5MgB_2 + YH_3 + 6H_2$$

Ein weiterer Aspekt der Erfindung betrifft die Verwendung des Wasserstoff speichernden Kompositmaterials gemäß der vorstehenden Beschreibung zur reversiblen Speicherung von Wasserstoff $H_2$, insbesondere zur Versorgung einer Brennstoffzelle in mobilen oder stationären Anwendungen. Dabei kann dem Material noch ein Katalysator zugesetzt sein, der die initiale Dissoziation von $H_2$ in 2H beim Hydrierungsprozess des Materials unterstützt. Solche Katalysatoren sind zahlreich bekannt.

Weitere vorteilhafte Ausgestaltungen der Erfindung ergeben sich aus den in den Unteransprüchen genannten Merkmalen.

Die Erfindung wird nachfolgend in einem Ausführungsbeispiel anhand der zugehörigen Zeichnungen näher erläutert. Es zeigen:

Figur 1         Desorptionscharakteristik des nicht in den Schutzbereich der Ansprüche fallenden Materials $LiBH_4/MgH_2$ bei unterschiedlichen Temperaturen;

Figur 2, 3      Röntgendiffraktionsmuster des nicht in den Schutzbereich den Ansprüche fallenden Materials $LiBH_4/MgH_2$ nach Hydrierung (Speicherzu- stand) bzw. nach Dehydrierung (Nichtspei- cherzustand);

Figur 4, 5      Röntgendiffraktionsmuster des Materials $NaBH_4/MgH_2$ im Speicher- bzw. Nichtspei- cherzustand;

Figur 6, 7      Röntgendiffraktionsmuster des Materials $Ca(BH_4)_2/MgH_2$ Speicher- bzw. Nichtspei- cherzustand;

Figur 8         Desorptionscharakteristik des Materials $Ca(BH_4)_2/MgH_2$ bei unterschiedlichen Temperaturen und

Figur 9, 10     Röntgendiffraktionsmuster des nicht in den Schutzbereich der Ansprüche fallenden Materials $LiBH_4/Mg_2Sn$ im Speicher- bzw. Nichtspeicherzustand.

Nachfolgend werden Beispiele für verschiedene Wasserstoff speichernde Kompositmaterialien beschrieben, von denen die Beispiele 1 und 4 nicht unter den Schutzbereich der vorliegenden Ansprüche fallen.

1. Herstellung des Materials LiBH$_4$/MgH$_2$

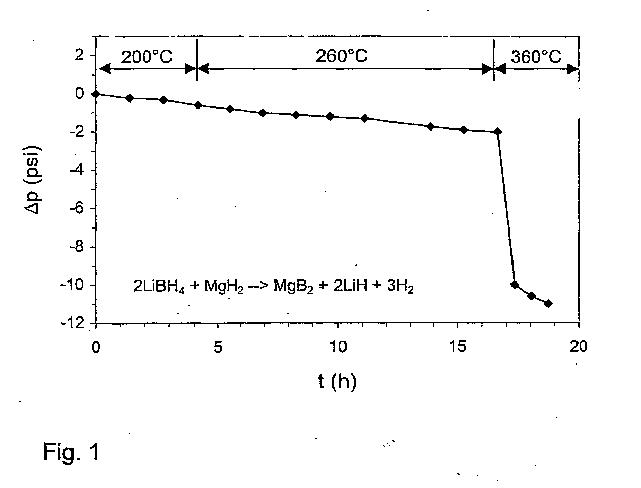

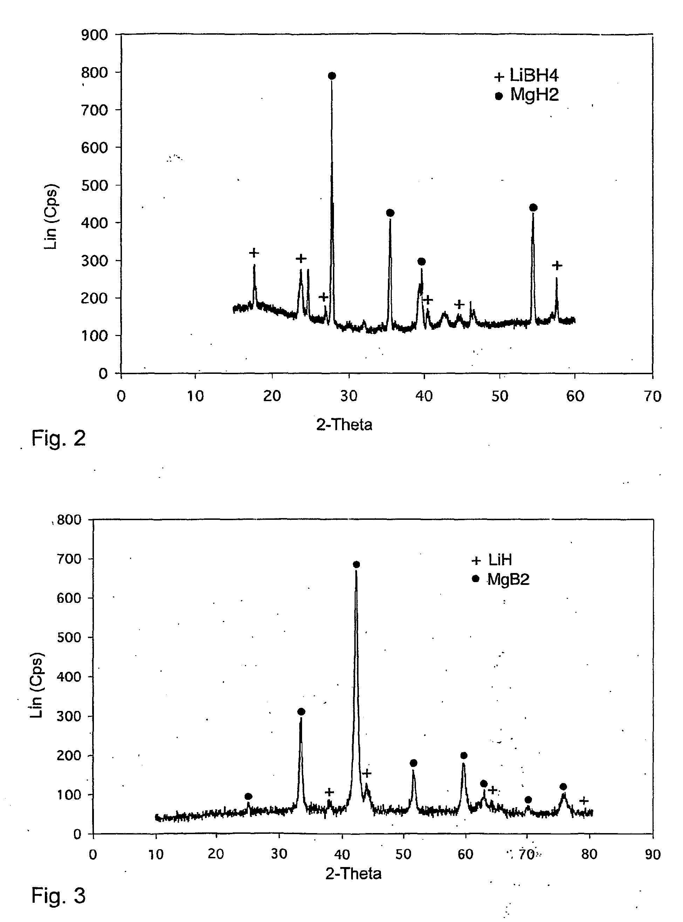

Die Ausgangsmaterialien LiH und MgB$_2$ wurden in einem Molverhältnis von 2:1 gemischt und 24 h in einer Mühle des Typs SPEX 8000 gemahlen. Von dem so erhaltenen nanokristallinen Pulver wurde jeweils 1 g in einem Hochdruckbehälter unter 300 bar Wasserstoffdruck bei einer Temperatur von 400°C über einen Zeitraum von 24 h hydriert (2LiH + MgB$_2$ +3 H$_2$ → 2 LiBH$_4$ + MgH$_2$). Dabei wurde eine Massenzunahme von 12 % festgestellt.
Das so hergestellte Kompositmaterial wurde hinsichtlich seiner Absorptions- und Desorptionscharakteristik untersucht, wofür es in einem geschlossenen Behältnis verschiedenen Temperaturen ausgesetzt wurde und die Druckveränderung im Behältnis gemessen wurde. Aus Figur 1 ist ersichtlich, dass bereits bei der Starttemperatur von 200°C die Freisetzung von Wasserstoff (Dehydrierung) beobachtet wird und diese Reaktion bei höheren Temperaturen beschleunigt wird. Bei einer Temperatur von ca. 360°C erfolgt ein sehr schneller und praktisch vollständiger Übergang in den Nichtspeicherzustand. Durch Verwendung eines geeigneten Katalysators lässt sich die Dehydrierung beschleunigen, so dass auch bei deutlich niedrigeren Temperaturen hinreichend schnelle Kinetiken vorliegen. Derartige Katalysatoren sind allgemein bekannt und sollen hier nicht näher ausgeführt werden. Aus einer Differenzwägung des Materials vor und nach der Absorption von Wasserstoff ergab sich eine spezifische Wasserstoffspeicherkapazität von 10 Gew.-% bezogen auf das Material vor der Hydrierung, das heißt auf seinen Nichtspeicherzustand.
Es wurden ferner Röntgenstrukturanalysen des Materials vor und nach der Desorption von Wasserstoff, das heißt von seinem Speicher- bzw. Nichtspeicherzustand durchgeführt (Figuren 2 und 3). Gemäß Figur 2 konnten sämtliche Diffraktionsreflexe des hydrierten Speicherzustandes auf die Kristallstrukturen von LiBH$_4$ und MgH$_2$ zurückgeführt werden. Hingegen lassen sich die Diffraktionsreflexe in Figur 3 eindeutig den Komponenten LiH und MgB$_2$ des dehydrierten Nichtspeicherzustandes zuordnen. Hierdurch ist der zweiphasige Zustand des Systems sowohl in seinem Speicher- als auch in seinem Nichtspeicherzustand bewiesen.

2. Herstellung des Materials NaBH$_4$/MgH$_2$

Die Herstellung erfolgte analog Beispiel 1. Die relevanten Herstellungsparameter und Materialeigenschaften sind nachfolgend tabellarisch zusammengefasst. Herstellungsreaktion:

$$MgB_2 + 2\,NaH + 4H_2 \rightarrow 2NaBH_4 + MgH_2$$

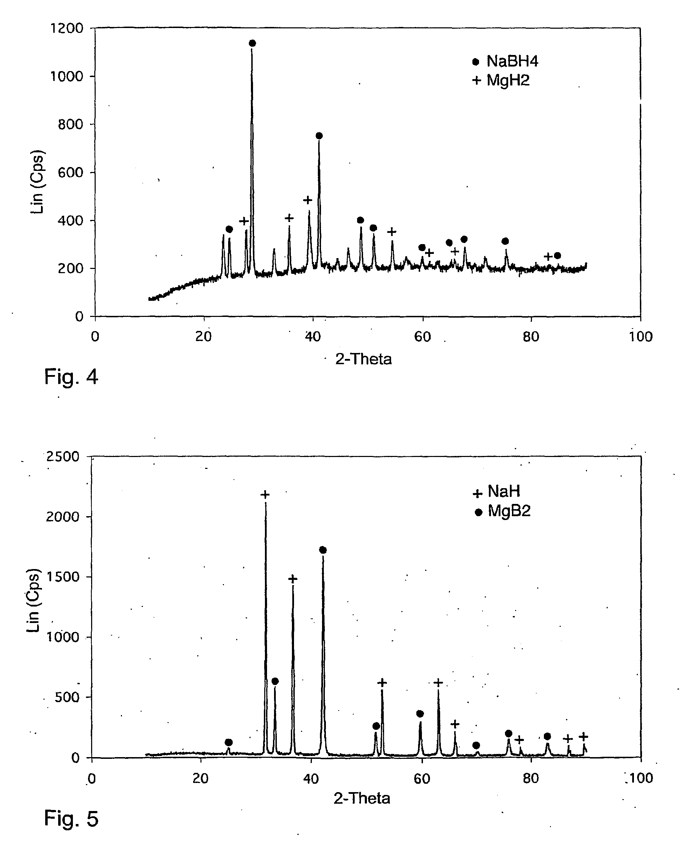

berechnete Gleichgewichtstemperatur T$_{eq}$.: 170°C
Ausgangsmaterialien: NaH, MgB$_2$ (Molverhältnis 2:1)
Mahldauer: 10 h
Hydrierungsdruck: 300 bar
Hydrierungstemperatur: 200°C
Hydrierungsdauer: 12 h
reversibler Wasserstoffgehalt: 8 Gew.-%
stöchiometr. Wasserstoffgehalt in NaBH$_4$: 10,5 Gew.-%
Aus Figur 4, die das Röntgendiffraktionsmuster des Materials NaBH$_4$/MgH$_2$ nach der Hydrierung zeigt, ergibt sich eine eindeutige Zuordnung sämtlicher auftretender Reflexe zu den Komponenten MgH$_2$ und NaBH$_4$ des Speicherzustandes. Hingegen lassen sich die in Figur 5 sichtbaren Reflexe, die nach der Dehydrierung gemessen wurden, den Komponenten MgB$_2$ und NaH des Nichtspeicherzustandes zuordnen.

3. Herstellung des Materials Ca(BH$_4$)$_2$/ MgH$_2$

Die Herstellung erfolgte analog Beispiel 1. Die relevanten Herstellungsparameter und Materialeigenschaften sind nachfolgend tabellarisch zusammengefasst.
Herstellungsreaktion:

$$MgB_2 + CaH_2 + 4H_2 \rightarrow Ca(BH_4)_2 + MgH_2$$

berechnete Gleichgewichtstemperatur T$_{eq}$.: 120-150°C
Ausgangsmaterialien: CaH$_2$, MgB$_2$ (Molverhältnis 1:1) Mahldauer: 6 h
Hydrierungsdruck: 300 bar
Hydrierungstemperatur: 200°C
Hydrierungsdauer: 6 h
reversibler Wasserstoffgehalt: 8,3 Gew.-%
stöchiom. Wasserstoffgehalt in Ca(BH$_4$)$_2$: 11,5 Gew.-%

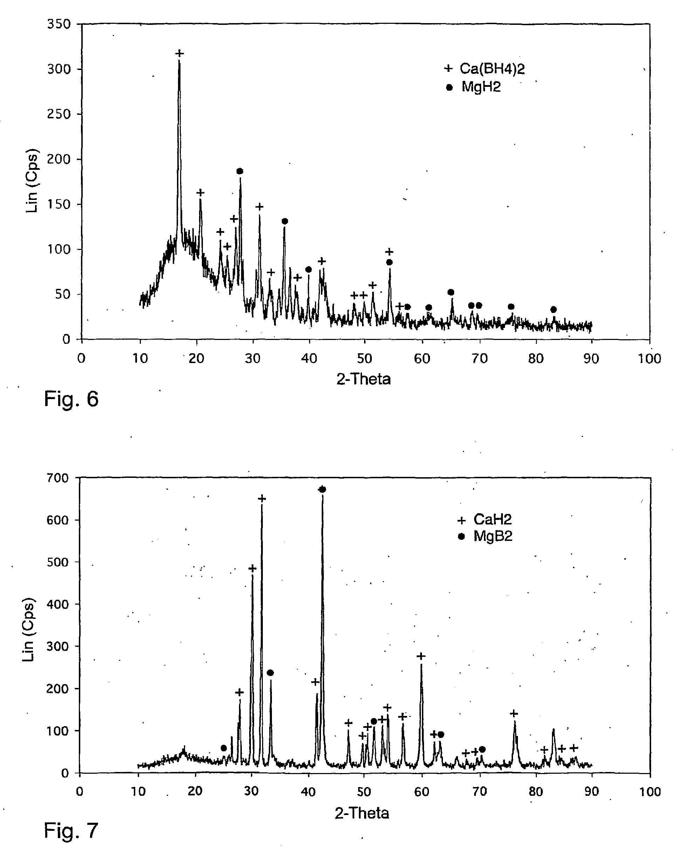

Aus Figur 6, die das Röntgendiffraktionsmuster des Materials $Ca(BH_4)_2/MgH_2$ nach der Hydrierung zeigt, ergibt sich eine eindeutige Zuordnung sämtlicher auftretender Reflexe zu den Komponenten $MgH_2$ und $Ca(BH_4)_2$ des Speicherzustandes. Hingegen lassen sich die in Figur 7 sichtbaren Reflexe, die nach der Dehydrierung gemessen wurden, den Komponenten $MgB_2$ und $CaH_2$ des Nichtspeicherzustandes zuordnen.

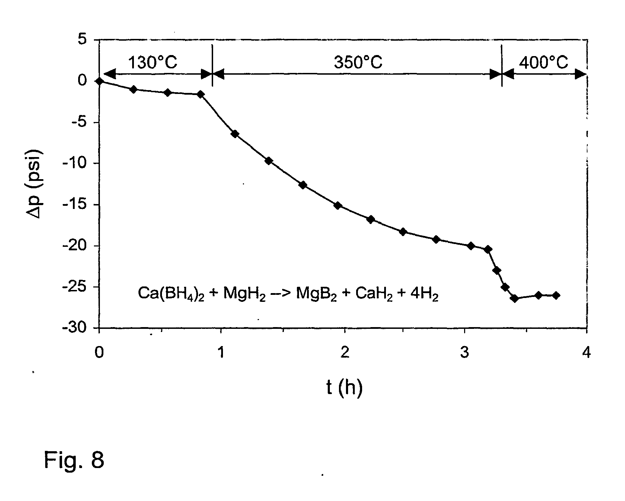

Die Desorptionscharakteristik des Materials $Ca(BH_4)_2/MgH_2$ wurde analog zu der in Beispiel 1 beschriebenen Vorgehensweise bei den Temperaturen 130, 350 und 400°C untersucht und ist in Figur 8 dargestellt. Die Druckänderung entspricht einer Freisetzung von 8,3 Ges.-% $H_2$ (reversibler Wasserstoffgehalt) bezogen auf den Speicherzustand.

4. Herstellung des Materials $LiBH_4/Mg_2Sn/Sn$

Die Herstellung erfolgte analog Beispiel 1. Die relevanten Herstellungsparameter und Materialeigenschaften sind nachfolgend tabellarisch zusammengefasst. Herstellungsreaktion:

$$Li_7Sn_2 + 3,5MgB_2 + 14H_2 \rightarrow 7LiBH_4 + 1,75Mg_2Sn + 0,25Sn$$

berechnete Gleichgewichtstemperatur $T_{eq.}$: 172°C
$\Delta G = 684.000$ J/mol - (T X 1.535 J/(mol·K))
Ausgangsmaterialien: $Li_7Sn_2$, $MgB_2$ (Molverh. 1:3,5)
Mahldauer: 12 h
Hydrierungsdruck: 300 bar
Hydrierungstemperatur: 300°C
Hydrierungsdauer: 6 h
reversibler Wasserstoffgehalt: 6 Gew.-%
stöchiometr. Wasserstoffgehalt in $LiBH_4$: 18,5 Gew.-%

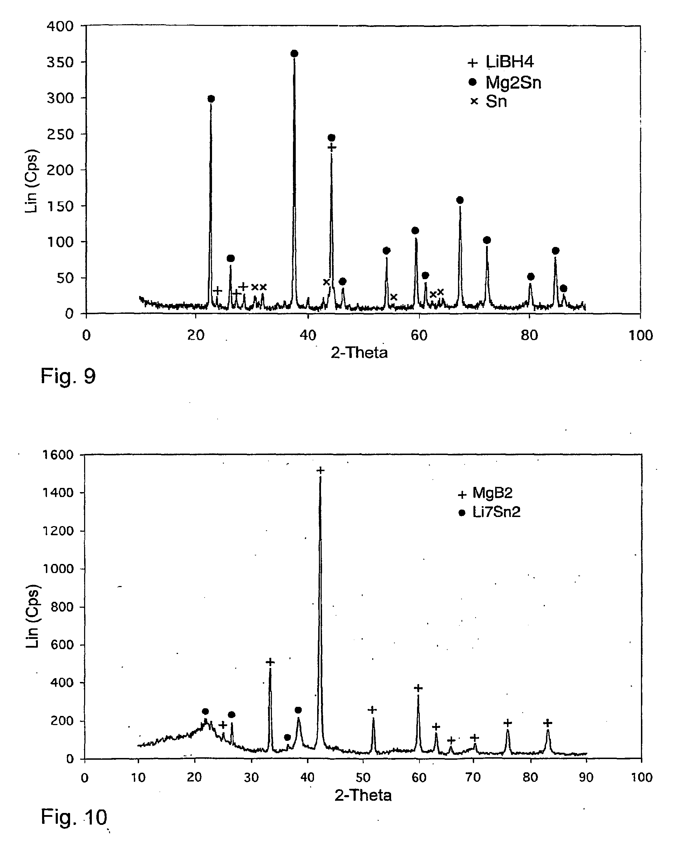

Aus Figur 9, die das Röntgendiffraktionsmuster des Materials $LiBH_4/Mg_2Sn/Sn$ nach der Hydrierung zeigt, ergibt sich eine eindeutige Zuordnung sämtlicher auftretender Reflexe zu den Komponenten $Mg_2Sn$, $LiBH_4$ und Sn des Speicherzustandes. Hingegen lassen sich die in Figur 10 sichtbaren Reflexe, die nach der Dehydrierung gemessen wurden, den Komponenten $Li_7Sn_2$ und $MgB_2$ des Nichtspeicherzustandes zuordnen.

Sämtliche vorstehend für die Herstellung der Materialien genannten Hydrierungsbedingungen (Druck, Temperatur, Dauer) wurden nicht optimiert. Vielmehr wurden sie entsprechend einer möglichst hohen Hydrierungsrate gewählt.

**Patentansprüche**

1. Wasserstoff speicherndes Kompositmaterial, das im Wesentlichen reversibel zwischen einem Speicherzustand und einem Nichtspeicherzustand und optional einem oder mehreren Zwischenzuständen überführbar ist, wobei das System in seinem Speicherzustand die Komponenten umfasst:

(a) zumindest eine erste Hydridkomponente, die zumindest ein komplexes Hydrid $M_xA_yH_z$ umfasst, worin M ein Metall der Ordnungszahl > 3, ausgewählt aus den Gruppen des Periodensystems IA, IIA, IIIB, IVB, VB und den Lanthaniden ist und A ausgewählt ist aus der Gruppe B, Si, C, Ga, Ge, Zn, Sn, S und N, und
(b) zumindest eine zweite Komponente, die mindestens eine Komponente umfasst aus:

(i) einem Element C in der Oxidationsstufe 0,
(ii) einer wasserstofffreien, binären oder höheren Verbindung oder Legierung des Elements C mit mindestens einem weiteren Element D,
(iii) einem binären Hydrid $E_xH_z$, wobei E ausgewählt ist aus den Gruppen IA, IIA, IIIB, IVB, VB, XB und XIIB und den Lanthaniden, und
(iv) einem Legierungshydrid $F_xG_yH_z$ mindestens zweier Metalle F und G,

wobei die zumindest eine erste Hydridkomponente und die zumindest eine zweite Komponente in einem ersten festen Mehrphasensystem vorliegen und wobei bei der Überführung in den Nichtspeicherzustand des Systems die zumindest eine erste Hydridkomponente mit der zumindest einen zweiten Komponente derart unter Bildung von $H_2$ reagiert, dass im Nichtspeicherzustand mindestens eine weitere wasserstofffreie Verbindung und/oder Legierung gebildet wird und ein weiteres festes Mehrphasensystem entsteht.

**2.** Kompositmaterial nach Anspruch 1, wobei das Material eine amorphe oder kristalline, insbesondere nanokristalline, Mikrostruktur aufweist, oder eine Mischung von diesen.

**3.** Kompositmaterial nach einem der vorhergehenden Ansprüche, wobei im Speicherzustand die zumindest eine erste Hydridkomponente zusätzlich zu dem

(i) zumindest einen komplexen Hydrid $M_xA_yH_z$
(ii) zumindest ein zweites binäres Hydrid $B_xH_z$ umfasst, worin B ausgewählt ist aus den Gruppen IA, IIA, IIIB, IVB, VB, XB und XIIB und den Lanthaniden.

**4.** Kompositmaterial nach einem der vorhergehenden Ansprüche, wobei
die Elemente C und D ausgewählt sind aus der Gruppe der Metalle, Nicht-, Halb- und Übergangsmetalle und den Lanthaniden, insbesondere aus der Gruppe Sb, Bi, Ge, Sn, Pb, Ga, In, Tl, Se, S, Te, Br, I, Sc, Y, La, Ti, Zr, Hf, V, Nb, Ta, Mo, W, Re, Ru, Os, Co, Ag, Li, Rb, Cs, Be, Mg, Sr, Ba und den Lanthaniden.

**5.** Kompositmaterial nach einem der vorhergehenden Ansprüche, wobei
die Elemente B und E der binären Hydride ausgewählt sind aus der Gruppe Li, Na, K, Rb, Cs, Be, Mg, Ca, Sr, Sc, Y, La, Ti, Zr, Hf, V, Nb, Ta, Zn, Pd und den Lanthaniden.

**6.** Kompositmaterial nach einem der vorhergehenden Ansprüche, wobei die Komponenten und die Mikrostruktur des Materials so gewählt sind, dass die Reaktionsenthalpie ($\Delta H$) der Gesamtreaktion des Systems zwischen seinem Nichtspeicher- und seinem Speicherzustand pro Mol Wasserstoff $H_2$ im Bereich von -10 bis -65 $kJ/mol_{H2}$, insbesondere -15 bis -40 $kJ/mol_{H2}$ liegt.

**7.** Kompositmaterial nach einem der vorhergehenden Ansprüche, wobei das Material zwischen seinem Speicherzustand und seinem Nichtspeicherzustand und optional seinem oder seinen Zwischenzuständen durch Variation des Drucks und/oder der Temperatur überführbar ist.

**8.** Verwendung eines Kompositmaterials nach einem der Ansprüche 1 bis 7 in einer Vorrichtung zur reversiblen Speicherung von Wasserstoff ($H_2$).

**9.** Verwendung nach Anspruch 8 zur Versorgung einer Brennstoffzelle oder eines Verbrennungsmotors.

**Claims**

**1.** Hydrogen-storing composite material which can be converted essentially reversibly between a storage state and a non-storage state and optionally one or more intermediate states, where the system in its storage state comprises the following components:

(a) at least a first hydride component which comprises at least one complex hydride $M_xA_yH_z$ in which M is a metal of atomic number > 3 selected from groups IA, IIA, IIIB, IVB, VB of the periodic table and the lanthanides, and A is selected from the group of B, Si, C, Ga, Ge, Zn, Sn, S and N, and
(b) at least one second component comprising at least one component selected from:

(i) an element C in the 0 oxidation state,
(ii) a hydrogen-free, binary or higher compound or alloy of the element C with at least one further element D,
(iii) a binary hydride $E_xH_z$ where E is selected from groups IA, IIA, IIIB, IVB, VB, XB, XIIB, and the lanthanides, and
(iv) an alloy hydride $F_xG_yH_z$ of at least two metals F and G,

wherein the at least one first hydride component and the at least one second component are present in a first solid multiphase system, and wherein the conversion to the non-storage state of the system involves reaction of the at least one first hydride component with the at least one second component to form $H_2$ such that, in the non-storage state, at least one further hydrogen-free compound and/or alloy is formed and a further solid multiphase system arises.

**2.** Composite material according to Claim 1, wherein the material has an amorphous or crystalline, especially nanocrystalline, microstructure, or a mixture thereof.

3. Composite material according to either of the preceding claims, wherein, in the storage state, the at least one first hydride component comprises, in addition to the

   (i) at least one complex hydride $M_xA_yH_z$,
   (ii) at least one second binary hydride $B_xH_z$ in which B is selected from groups IA, IIA, IIIB, IVB, VB, XB and XIIB, and the lanthanides.

4. Composite material according to any of the preceding claims, wherein
   the elements C and D are selected from the group of the metals, non-metals, semi-metals and transition metals and the lanthanides, especially from the group of Sb, Bi, Ge, Sn, Pb, Ga, In, Tl, Se, S, Te, Br, I, Sc, Y, La, Ti, Zr, Hf, V, Nb, Ta, Mo, W, Re, Ru, Os, Co, Ag, Li, Rb, Cs, Be, Mg, Sr, Ba and the lanthanides.

5. Composite material according to any of the preceding claims, wherein
   the elements B and E of the binary hydrides are selected from the group of Li, Na, K, Rb, Cs, Be, Mg, Ca, Sr, Sc, Y, La, Ti, Zr, Hf, V, Nb, Ta, Zn, Pd and the lanthanides.

6. Composite material according to any of the preceding claims, wherein the components and the microstructure of the material are selected such that the reaction enthalpy ($\Delta H$) of the overall reaction of the system between the non-storage state and the storage-state thereof, per mole of hydrogen $H_2$, is in the range from -10 to -65 kJ/mol$_{H2}$, especially -15 to -40 kJ/mol$_{H2}$.

7. Composite material according to any of the preceding claims, wherein the material is convertible between the storage state and the non-storage state thereof and optionally the intermediate state(s) thereof, by varying the pressure and/or the temperature.

8. Use of a composite material according to any of Claims 1 to 7 in a device for reversible storage of hydrogen ($H_2$).

9. Use according to Claim 8, for supply of a fuel cell or of an internal combustion engine.


**Revendications**

1. Matériau composite accumulant de l'hydrogène qui peut passer de manière essentiellement réversible d'un état d'accumulation à un état de non-accumulation et éventuellement par un ou plusieurs états intermédiaires, où le système contient, dans son état d'accumulation, les composants suivantes :

   (a) au moins un premier composant hydrure, qui comprend au moins un hydrure complexe $M_xA_yH_z$, où M représente un métal de nombre atomique > 3, choisi parmi les groupes IA, IIA, IIIB, IVB, VB du système périodique et les lanthanides et A est choisi dans le groupe formé par B, Si, C, Ga, Ge, Zn, Sn, S et N, et
   (b) au moins un deuxième composant, qui comprend au moins un composant, constitué par :

      (i) un élément C dans l'étage d'oxydation 0,
      (ii) un composé binaire ou supérieur ou un alliage de l'élément C avec au moins un autre élément D exempt d'hydrogène,
      (iii) un hydrure binaire $E_xH_z$, où E est choisi parmi les groupes IA, IIA, IIIB, IVB, VB, XB et XIIB et les lanthanides, et
      (iv) un hydrure d'alliage $F_xG_yH_z$ d'au moins deux métaux F et G,

   où ledit au moins un premier composant hydrure et ledit au moins un deuxième composant se trouvent dans un premier système solide à plusieurs phases et où lors du passage à l'état de non-accumulation du système, ledit au moins un premier composant hydrure réagit avec ledit au moins un deuxième composant avec formation de $H_2$ de manière telle que dans l'état de non-accumulation, au moins un autre composé et/ou alliage exempt d'hydrogène est formé et qu'il se forme un autre système solide à plusieurs phases.

2. Matériau composite selon la revendication 1, où le matériau présente une microstructure amorphe ou cristalline, en particulier nanocristalline, ou un mélange de celles-ci.

**3.** Matériau composite selon l'une quelconque des revendications précédentes, où, dans l'état d'accumulation, ledit au moins un premier composant hydrure comprend en plus dudit

(i) au moins un hydrure complexe $M_xA_yH_z$
(ii) au moins un deuxième hydrure binaire $B_xH_z$, où B est choisi parmi les groupes IA, IIA, IIIB, IVB, VB, XB et XIIB et les lanthanides.

**4.** Matériau composite selon l'une quelconque des revendications précédentes, où les éléments C et D sont choisis dans le groupe des métaux, des non-métaux, des semi-métaux et des métaux de transition et des lanthanides, en particulier dans le groupe formé par Sb, Bi, Ge, Sn, Pb, Ga, In, Tl, Se, S, Te, Br, I, Sc, Y, La, Ti, Zr, Hf, V, Nb, Ta, Mo, W, Re, Ru, Os, Co, Ag, Li, Rb, Cs, Be, Mg, Sr, Ba et les lanthanides.

**5.** Matériau composite selon l'une quelconque des revendications précédentes, où les éléments B et E des hydrures binaires sont choisis dans le groupe formé par Li, Na, K, Rb, Cs, Be, Mg, Ca, Sr, Sc, Y, La, Ti, Zr, Hf, V, Nb, Ta, Zn, Pd et les lanthanides.

**6.** Matériau composite selon l'une quelconque des revendications précédentes, où les composants et la microstructure du matériau sont choisis de manière telle que l'enthalpie de réaction ($\Delta$H) de la réaction totale du système entre son état de non-accumulation et son état d'accumulation par mole d'hydrogène $H_2$ se situe dans la plage de -10 à -65 kJ/mol$_{H2}$, en particulier de -15 à -40 kJ/mol$_{H2}$.

**7.** Matériau composite selon l'une quelconque des revendications précédentes, où le matériau peut passer de son état d'accumulation à son état de non-accumulation et éventuellement par son ou ses états intermédiaires par variation de la pression et/ou de la température.

**8.** Utilisation d'un matériau composite selon l'une quelconque des revendications 1 à 7 dans un dispositif pour l'accumulation réversible d'hydrogène ($H_2$).

**9.** Utilisation selon la revendication 8 pour l'alimentation d'une pile à combustible ou d'un moteur à combustion.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010018939 A
- US 6514478 B

**In der Beschreibung aufgeführte Nicht-Patentliteratur**

- **J. Huot et al.** *Journal of Alloys and Compounds,* 2003, vol. 353, L12-L15
- **J.-P. Tessier et al.** *Journal of Alloys and Compounds,* 2004, vol. 376, 180-185
- **G. Liang et al.** *Journal of Alloys and Compounds,* 2000, vol. 297, 261-264
- *Journal of Alloys and Compounds,* 1999, vol. 291, 295-299